# EUROPEAN PATENT SPECIFICATION

(11) **EP 4 140 238 B1**
(45) Date of publication and mention of the grant of the patent: **21.05.2025**
(21) Application number: 21822590.2
(22) Date of filing: 28.05.2021
(51) Int. Cl.: H04W 74/00, H04W 56/00, H04W 74/0833

(54) **WIRELESS COMMUNICATION METHOD AND USER EQUIPMENT FOR UL PRACH TRANSMISSION**
DRAHTLOSES KOMMUNIKATIONSVERFAHREN UND BENUTZERGERÄT FÜR UL-PRACH-ÜBERTRAGUNG
PROCÉDÉ DE COMMUNICATION SANS FIL ET ÉQUIPEMENT D'UTILISATEUR POUR TRANSMISSION D'UN PRACH UL

(30) Priority: 12.06.2020 US 202063038684 P
(43) Date of publication of application: 01.03.2023
(73) Proprietor: Sharp Kabushiki Kaisha, Sakai-shi, Osaka 590-8522 (JP)
(72) Inventor: CHENG, Chienchun, Neihu Dist., Taipei 114 (TW); CHEN, Hungchen, Neihu Dist., Taipei 114 (TW); WANG, Haihan, Neihu Dist., Taipei 114 (TW)
(74) Representative: Müller-Boré & Partner Patentanwälte PartG mbB
(86) International application number: PCT/CN2021/096644
(87) International publication number: WO 2021/249206

(56) References cited:
- WO-A1-2019/097922
- WO-A1-2020/092561
- US-A1- 2019 363 843
- US-A1- 2020 153 500
- US-A1- 2020 153 500
- "3rd Generation Partnership Project; Technical Specification Group Radio Access Network; Solutions for NR to support non-terrestrial networks (NTN) (Release 16)", vol. RAN WG3, no. V0.9.0, 18 November 2019 (2019-11-18), pages 1 - 114, XP051840615, Retrieved from the Internet <URL:ftp://ftp.3gpp.org/Specs/archive/38_series/38.821/38821-090.zip R3-196330_38821-090_V2 revisions.doc> [retrieved on 20191118]
- OPPO: "NTN control procedure for physical layer", 3GPP DRAFT; R1-1910386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 5 October 2019 (2019-10-05), Mobile Competence Centre ; 650, route des Lucioles ; F-06921 Sophia-Antipolis Cedex ; France , XP051789191

## Description

### FIELD

The present disclosure is generally related to wireless communications, and specifically, to a wireless communication method and a user equipment for uplink (UL) Physical Random Access Channel (PRACH) transmission.

### BACKGROUND

With the tremendous growth in the number of connected devices and the rapid increase in user/Network (NW) traffic volume, various efforts have been made to improve different aspects of wireless communication for the next-generation wireless communication system, such as the fifth-generation (5G) New Radio (NR) , by improving data rate, latency, reliability, and mobility.

The 5G NR system is designed to provide flexibility and configurability to optimize the NW services and types, accommodating various use cases such as Enhanced Mobile Broadband (eMBB) , Massive Machine-Type Communication (mMTC) , and Ultra-Reliable and Low-Latency Communication (URLLC) .

However, as the demand for radio access continues to increase, there is a need in the art to improve uplink (UL) Physical Random Access Channel (PRACH) transmission.

WO 2019/097922 A1 describes a terminal device that comprises a control unit that acquires information about the classification of a base station device and, on the basis of the information about the classification of the base station device, controls the timing of the transmission of signals to the base station device.

US 2019/363843 A1 describes a UE comprising a transmitter configured to transmit a capability ID corresponding to a plurality of capabilities of the UE, to a gNB. The UE may be configured to receive first and second DCI formats. Each format may be different and thus may provide the UE with different control information. The second format may comprise fewer bits than the first format and may have both fixed length and variable length fields. At least one of the fixed length fields may be used to identify the DCI format, while the variable length fields may be used to indicate resources and other information for transmitting or receiving data on a shared channel in accordance with the capability ID. The UE may receive a third DCI format indicating that the UE should not monitor a PDCCH for a period.

US 2020/153500 A1 describes a handover method for a satellite base station, performed by a terminal, may comprise selecting at least one candidate satellite base station; performing signal strength measurement on a first candidate satellite base station among the at least one candidate satellite base station; in response to determining that the first candidate satellite base station is available according to a result of the signal strength measurement, selecting the first candidate satellite base station as a target satellite base station; and in response to determining that the first candidate satellite base station is not available according to the result of the signal strength measurement, performing signal strength measurement on a second candidate satellite base station among the at least one candidate satellite base station.

### SUMMARY

The above and other objects are achieved by a wireless communication method performed by a User Equipment (UE) for an uplink (UL) Physical Random Access Channel (PRACH) transmission and a UE as defined in the independent claims, respectively. Preferred embodiments are set forth in the dependent claims.

### BRIEF DESCRIPTION OF THE DRAWINGS

Aspects of the present disclosure are best understood from the following when read with the accompanying figures. Various features are not drawn to scale. Dimensions of various features may be arbitrarily increased or reduced for clarity of discussion.
Figure 1 illustrates an overview of the NTN network according to an example implementation of the present disclosure.
Figure 2 illustrates an overview of the delay estimation in the NTN network according to an example implementation of the present disclosure.
Figure 3 illustrates an overview of the delay estimation and NW transmission timing control according to an example implementation of the present disclosure.
Figure 4 illustrates an overview of the SI acquisition according to an example implementation of the present disclosure.
Figure 5 illustrates an illustration of a crowed first set of system frames and possible enhancements according to an implementation of the present disclosure.
Figure 6 illustrates an overview of RA resource selection and RA preamble transmission according to an implementation of the present disclosure.
Figure 7 illustrates an illustration of RA resource selection initiated after receiving NTNSIBs and TA derivation according to an implementation of the present disclosure.
Figure 8 illustrates an illustration of PDCCH order and RA initiation according to an implementation of the present disclosure.
Figure 9 illustrates a procedure for UL PRACH transmission performed by a UE according to an implementation of the present disclosure.
Figure 10 illustrates a block diagram of a node for wireless communication according to an implementation of the present disclosure.

### DESCRIPTION

The acronyms in the present disclosure are defined as follows. Unless otherwise specified, the acronyms have the following meanings.

| | |
|---|---|
| Acronym | Full name |
| 3GPP | 3^{rd} Generation Partnership Project |
| BS | Base Station |
| BWP | Bandwidth Part |
| CBG | Code Block Group |
| CBRA | Contention-Based Random Access |
| C-RNTI | Cell Radio Network Temporary Identifier |
| CSI | Channel State Information |
| Control Resource Set | CORESET |
| DCI | Downlink Control Information |
| DL | Downlink |
| DL-SCH | Downlink-Shared Channel |
| EFB | Earth Fixed Beam |
| EMB | Earth Moving Beam |
| GPS | Global Positioning System |
| gNB | Base Station |
| GNSS | Global Navigation Satellite System |
| HO | Handover |
| LBT | Listen Before Talk |
| LEO | Low Earth Orbiting |
| LTE | Long Term Evolution |
| MAC | Medium Access Control |
| MIB | Master Information Block |
| Msg | Message |
| MCG | Master Cell Group |
| NR | New Radio |
| NTN | Non-Terrestrial Networks |
| NW | Network |
| OFDM | Orthogonal Frequency Division Modulation |
| PCell | Primary Cell |
| PDCCH | Physical Downlink Control Channel |
| PDSCH | Physical Downlink Shared Channel |
| PRB | Physical Resource Block |
| PRACH | Physical Random Access Channel |
| PSCell | Primary Secondary Cell |
| PUCCH | Physical Uplink Control Channel |
| PUSCH | Physical Uplink Shared Channel |
| RA | Random Access |
| RACH | Random Access Channel |
| RAN | Radio Access Network |
| Rel | Release |
| RO | RACH occasion |
| RRC | Radio Resource Control |
| RSRP | Reference Signal Received Power |
| SCell | Secondary Cell |
| SCG | Secondary Cell Group |
| SI | System Information |
| SIB | System Information Block |
| SpCell | Special Cell |
| SSB | Synchronization Signal Block |
| SUL | Supplementary Uplink |
| TA | Timing Advance |
| TB | Transport Block |
| TS | Technical Specification |
| UE | User Equipment |
| UL | Uplink |
| UTC | Coordinated Universal Time |
| WI | Working Item |

The following contains specific information pertaining to implementations of the present disclosure. The drawings and their accompanying detailed disclosure are directed to merely exemplary implementations. However, the present disclosure is not limited to these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are not meant to characterize that all implementations of the present disclosure must include the particular feature, structure, or characteristic, and should instead be understood to mean "at least some implementations of the present disclosure" includes the stated particular feature, structure, or characteristic.

The term "coupled" is defined as connected, whether directly or indirectly through intervening components, and is not necessarily limited to physical connections. The term "comprising," when utilized, means "including, but not necessarily limited to"; it specifically indicates open-ended inclusion or membership in the so-disclosed combination, group, series, and the equivalent.

The term "and/or" is only an association relationship for describing associated objects, and represents that three relationships may exist, for example, A and/or B may represent that: A exists alone, A and B exist at the same time, and B exists alone. "A and/or B and/or C" may represent that at least one of A, B and C exists. In addition, the character "/"generally represents that the former and latter associated objects are in an "or" relationship.

Additionally, for the purpose of non-limiting explanation, specific details, such as functional entities, techniques, protocols, standards, and the like, are set forth for providing an understanding of the disclosed technology. In other examples, a detailed disclosure of well-known methods, technologies, systems, architectures, and the like are omitted in order not to obscure the present disclosure with unnecessary details.

Persons skilled in the art will immediately recognize that any NW function(s) or algorithm(s) in the present disclosure may be implemented by hardware, software, or a combination of software and hardware. Disclosed functions may correspond to modules that may be software, hardware, firmware, or any combination thereof. The software implementation may comprise computer-executable instructions stored on computer-readable media such as memory or other types of storage devices.

For example, one or more microprocessors or general-purpose computers with communication processing capability may be programmed with corresponding executable instructions and carry out the disclosed NW function(s) or algorithm(s). The microprocessors or general-purpose computers may be formed of Applications Specific Integrated Circuitry (ASIC), programmable logic arrays, and/or using one or more Digital Signal Processor (DSPs). Although some of the example implementations in the present disclosure are directed to software installed and executing on computer hardware, alternative example implementations implemented as firmware or as hardware or combination of hardware and software are well within the scope of the present disclosure.

The computer-readable medium includes but is not limited to Random Access Memory (RAM), Read-Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication NW architecture (e.g., a LTE system, an LTE-Advanced (LTE-A) system, or an LTE-Advanced Pro system) typically includes at least one BS, at least one UE, and one or more optional NW elements that provide connection towards an NW. The UE communicates with the NW (e.g., a CN, an Evolved Packet Core (EPC) NW, an Evolved Universal Terrestrial Radio Access NW (E-UTRAN), a Next-Generation Core (NGC), a 5G Core Network (5GC), or an Internet), through a RAN established by the BS.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, or a Personal Digital Assistant (PDA) with wireless communication capability. The UE is configured to receive and transmit signals over an air interface to one or more cells in a RAN.

A BS may include, but not limited to, a Node B (NB) as in the Universal Mobile Telecommunication System (UMTS), an evolved Node B (eNB) as in the LTE-A, a Radio NW Controller (RNC) as in the UMTS, a Base Station Controller (BSC) as in the Global System for Mobile communications (GSM)/GSM EDGE Radio Access NW (GERAN), a Next Generation eNB (ng-eNB) as in an E-UTRA BS in connection with the 5GC, a gNB as in the 5G Access NW (5G-AN), and any other apparatus capable of controlling radio communication and managing radio resources within a cell. The BS may connect to serve the one or more UEs through a radio interface to the NW.

A BS may be configured to provide communication services according to at least one of the following Radio Access Technologies (RATs): Worldwide Interoperability for Microwave Access (WiMAX), GSM (often referred to as 2G), GERAN, General Packet Radio Service (GPRS), UMTS (often referred to as 3G) based on basic Wideband-Code Division Multiple Access (W-CDMA), High-Speed Packet Access (HSPA), LTE, LTE-A, enhanced LTE (eLTE), NR (often referred to as 5G), and LTE-A Pro. However, the scope of the present disclosure should not be limited to the protocols previously disclosed.

The BS may be operable to provide radio coverage to a specific geographical area using a plurality of cells included in the RAN. The BS may support the operations of the cells. Each cell is operable to provide services to at least one UE within its radio coverage. More specifically, each cell (often referred to as a serving cell) may provide services to serve one or more UEs within its radio coverage, (e.g., each cell schedules the DL and optionally UL resources to at least one UE within its radio coverage for DL and optionally UL packet transmissions). The BS may communicate with one or more UEs in the radio communication system through the plurality of cells. A cell may allocate sidelink (SL) resources for supporting proximity service (ProSe). Each cell may have overlapped coverage areas with other cells.

In Multi-RAT Dual Connectivity (MR-DC) cases, the primary cell of an MCG or a SCG may be called as a SpCell. A PCell may refer to the SpCell of an MCG. A PSCell may refer to the SpCell of an SCG. MCG refers to a group of serving cells associated with the Master Node (MN), comprising the SpCell and optionally one or more SCells. SCG refers to a group of serving cells associated with the Secondary Node (SN), comprising of the SpCell and optionally one or more SCells.

In some implementations, the UE may not have (LTE/NR) RRC connections with the concerned serving cells of the associated services. In other words, the UE may not have UE-specific RRC signalings exchange with the serving cell. Instead, the UE may only monitor the DL synchronization signals (e.g., DL synchronization burst sets) and/or broadcasting SI related to the concerned services from such serving cells. In addition, the UE may have at least one serving cell on one or more target SL frequency carriers for the associated services. In some other implementations, the UE may consider the RAN which configures one or more of the serving cells as a serving RAN.

As previously disclosed, the frame structure for NR supports flexible configurations for accommodating various next generation (e.g., 5G) communication requirements, such as eMBB, mMTC, and URLLC, while fulfilling high reliability, high data rate, and low latency requirements. The OFDM technology, as disclosed in 3GPP, may serve as a baseline for an NR waveform. The scalable OFDM numerology, such as the adaptive sub-carrier spacing, the channel bandwidth, and the cyclic prefix (CP), may also be used. Additionally, two coding schemes are considered for NR: (1) low-density parity-check (LDPC) code and (2) polar code. The coding scheme adaption may be configured based on the channel conditions and/or service applications.

It is also considered that in a transmission time interval of a single NR frame, at least DL transmission data, a guard period, and UL transmission data should be included. The respective portions of the DL transmission data, the guard period, the UL transmission data should also be configurable, for example, based on the NW dynamics of NR. In addition, SL resources may also be provided in an NR frame to support ProSe services.

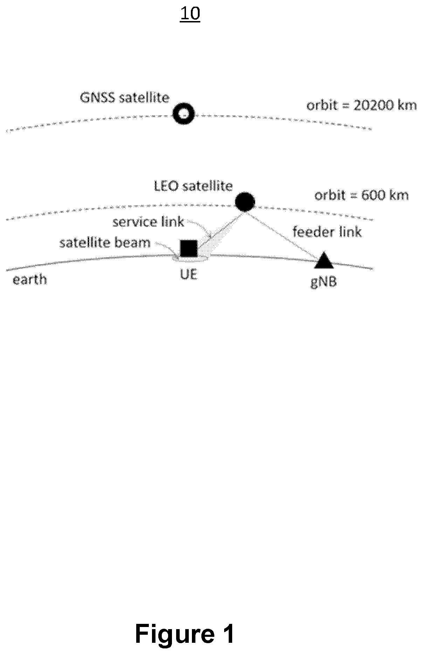

Please refer to Figure 1, which illustrates an overview of the NTN network 10 according to an example implementation of the present disclosure. As shown in Figure 1, in the NTN network 10, an LEO satellite of transparent payload at orbit 600 km is presented to demonstrate the relation among a gNB, an LEO satellite and a UE. In some implementations, the NTN refer to NWs, or segments of NWs, using a spaceborne vehicle for transmission, e.g., using LEO satellites. In 3GPP Release 17 (Rel-17) NTN WI, transparent payload-based LEO NW addressing at least 3GPP class 3 UE with GNSS capability and with both EFB and EMB footprint has been prioritized. More introductions are presented in below:
- **Transparent payload-based LEO NW:** this refers to a relay-based NTN. In this implementation, the LEO satellites simply perform amplify-and-forward in space, and the gNB is located on the ground connected to the core NW. The orbit of 600 km has been considered in the WI.
- **3GPP class 3 UE:** this refers to Power Class UE 3. The definition is used for the UL transmit (TX) power level set to be 23dBm with a range of plus and minus 2dB. This setting is mainly driven to ensure backward compatibility with prior technologies (i.e. Rel-15 NR/GSM/UMTS) so that NW deployment topologies remain similar.
- **GNSS:** this refers to the standard generic term for satellite navigation systems that provide autonomous geo-spatial positioning with global coverage. This term includes e.g. the GPS, GLONASS, Galileo, Beidou and other regional systems. The GNSS is usually operated on an orbit of 20200 km.

In one implementation, as shown in Figure 1, the feeder link refers to a radio link between the satellite and the gNB. In another implementation, the service link refers to a radio link between the satellite and the UE. In another implementation, the satellite beam refers to a beam generated by an antenna onboard a satellite. A diameter of a satellite beam has been considered with a range from 50 km to 1000 km, making impacts on maximum differential delay among UEs in service.

In addition, the following introduction may be used to further elaborate terms, examples, embodiments, implementations, actions, behaviors, alternatives, aspects, or claims in the present disclosure.

### Reference time information

In some implementations, the reference time information is used to support strict synchronization accuracy requirements of Time Sensitive Communications (TSC) applications. In Rel-16 NR, the gNB may signal 5G system time reference information to the UE using unicast or broadcast RRC signalling via SIB9 with a granularity of 10 ns. The UE may use the parameters provided in this SIB to obtain the UTC, the GPS, and the local time for numerous purposes, e.g. to assist GPS initialization, to synchronize the UE clock.

Note that there is no notification for changes of this information to UEs. The reference time information is excluded when determining changes in SI, i.e. changes of the information should neither result in SI change notifications nor a modification of a value tag in SIB1.

In NTN, due to a large propagation delay, a UE may use the reference time information, or so-called time stamp, for delay estimation and compensation.

In one embodiment, NTN may broadcast time-variation parameters in SI, e.g., in SIB1, or other SI as SIB9 or NTNSIBs. Those parameters may contain information that needs to be updated frequently due to the satellite movement. Therefore, the notification mechanisms in NR may not support. For example, the value tag in SIB1 that indicates the version of the SI may only support 32 times of information update within 3 hours, which is insufficient for NTN scenarios. To handle this, the time-variation parameters carried by SI, e.g., timestamps, common TA, or common Doppler frequency shift, may not change notifications nor a medication of a value tag in SIB1. The validity of these parameters may depend on the timing when the UE receives or the timing when NW broadcasts. The UE may delete the stored parameters after K hours from the movement the stored parameters was successfully confirmed as valid, where K may be far smaller than 3 and may be configurable.

### Delay estimation and compensation

In NR, the uplink transmission timing is typically controlled by NW using regularly providing time adjustment command. Before preamble transmission of initial access, there is no such timing control in operation. Instead, UE determines the preamble transmission timing based on the received timing of an acquired SSB. Consequently, there will be an uncertainty in the preamble reception timing of at least two times the maximum propagation delay within the cell.

In NTN, due to the large propagation delay, the uncertainty of preamble reception timing may degrade RACH capacity dramatically. To handle this, the UE may estimate and compensate the propagation delay by NW assistant information, e.g., satellite ephemeris (Kbytes), or reference time information (99 bits).

In some implementations, the delay estimation may be done by the following steps:
- GNSS-based timing synchronization to adjust a UE internal clock and obtain current UTC.
- Cell search upon SSB, obtain MIB, SIB1 and SIB9.
- Read a timestamp in SIB9 and compare with the UTC at the end of the SI-window where SIB9 is transmitted to calculate the propagation delay.

In some implementations, the GNSS-based timing synchronization refers to clock synchronization between the UE internal clock and at least 4 atomic clocks on GNSS satellites. This provides precise operation time and frequency.

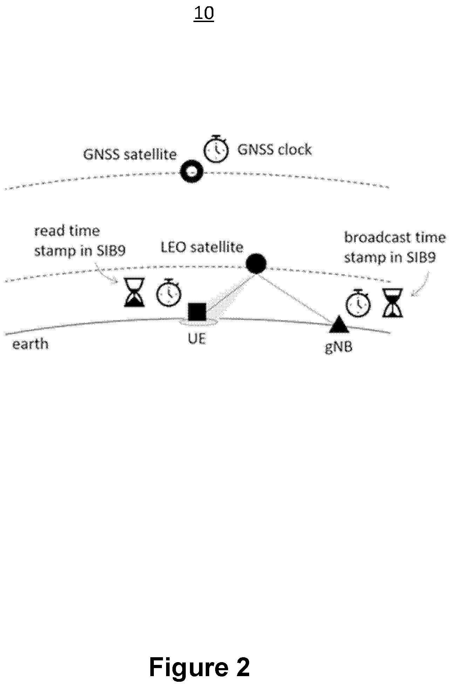

Please refers to Figure 2, which illustrates an overview of the delay estimation in the NTN network 10 according to an example implementation of the present disclosure. As shown in Figure 2, it demonstrates the delay estimation with a time stamp delivery in SIB9 for NTN, where the GNSS clock is used to be a reference clock for both the UE and the gNB.

In some implementations, with the reference clock, the UE may first synchronize to the GNSS clock to acquire current UTC and accurate operation frequency, and then the UE may synchronize to NW clock by receiving SSB and DL reference signals. In some other implementations, with the reference clock, the gNB may not need to synchronize to the GNSS clock and may only use the reference clock to broadcast a timestamp in the SI, e.g. SIB9, indicating the timing that SIB9 is transmitted.

After the UE receives the SIB9, the timestamp may be used by the UE to estimate the propagation delay. The UE requests the receiving time for the timing indicated by SIB9 from the GNSS receiver, and reads the timestamp carried by SIB9 to obtain the transmitting time from the gNB. As a result, the time difference between the transmission and the reception may be used as the propagation delay estimation.

In some implementations, with the delay estimation, the delay compensation may be done by the following steps:
- Calculate a timing offset, e.g., by 2 times of the delay (assume the same delay on UL and DL).
- Send a PRACH preamble in advance of a selected PRACH occasion based on the timing offset.

In some implementations, if the compensation is accurate enough, NW can measure the timing misalignment of the received PRACH preamble and then adjust UL transmission timing by proving time adjustment command in the random-access response (RAR) message. The accuracy requirement is from few microseconds to 2 milliseconds under following situations:
- If the accuracy is within the half of Cyclic Prefix (CP) length of the PRACH preamble, e.g., 51.6 µs when PRACH format 0 is used, the gNB may implement a single FFT window for processing the PRACH reception without additional complexity.
- If the accuracy is within 2 ms, the gNB may still be able to adjust the timing misalignment by the RAR message if subcarrier spacing (SCS) configuration is equal to 15 kHz, and the PRACH reception may require multiple FFT windows for processing the PRACH reception.
- If the accuracy is beyond 2 ms, NW may lose UL timing control and inter-UE interference occurs.

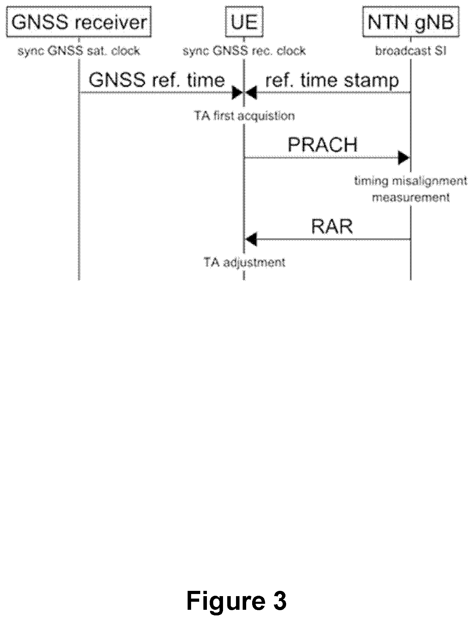

Please refers to Figure 3, which illustrates an overview of the delay estimation and NW transmission timing control according to an example implementation of the present disclosure. As shown in Figure 3, it demonstrates a signalling chart, where GNSS ref. time denotes UCT when the time stamp is received, TA first acquisition is the timing offset obtained by the delay estimation, and RAR refers to the RAR message that carries the TA adjustment command to UE. The UE determines the initial TA via reference timing by the GNSS receiver and the NTN gNB, and then corrects the TA value after receiving the RAR message. More specifically, if the UE performs the 2-step RA procedure, the PRACH/preamble may be transmitted via MsgA, and the RAR may be referred to MsgB.

### Timing Advance (TA)

In some implementations, TA refers to the timing offset between UL and DL frames. The UL frames may be transmitted in advance based on a TA value, indicated by NW. This is used to guarantee UL signals from different UEs to be received at the NW side on time without interfering each other. The typical TA value is set to two times the propagation delay. This value matters because the NW needs this information to:
- perform UL time scheduling, e.g., UL grants and UL slot offsets.
- ensure L1 synchronization, e.g., the TAG-specific timer defined in Rel-15 NR.
- enhance mobility, e.g., SMTC (SSB Measurement Timing Configuration) measurement gap and conditional HO.

In NTN, due to a large propagation delay, a UE may apply a large TA value. Thus, large scheduling offset between its DL and UL frame timing may be needed.

### Measurement gap

In some implementations, measurement gap is to create a small gap during which no transmission and reception may happen. Since there is no signal transmission and reception during the gap, a UE may switch to the target cell and perform the signal quality measurement, and come back to the current cell. This may be used for a handover purpose. The UE may measure the cell power (e.g., signal quality) of a candidate target cell (e.g., based on measurement configurations) and report the cell power to NW, so that the NW can decide whether to instruct the UE to handover to the target cell or not.

### Association period

In some implementations, the association period is defined to make sure that all the transmitted SSBs are mapped at least once to the RO, such that all the transmitted SSBs may be selected. In Rel-15 NR, if there is a set of ROs that are not mapped to any SSB, the set of ROs are not used for PRACH transmissions. The association period is also used for a RO indexing rule for PRACH mask and a period indexing of acquisition of SI message.

In some implementations, a PRACH configuration period has a maximum value of 160 msec. This sets the max value of association period as 160 msec, such that a pattern between PRACH occasions and SSBs repeats at most every 160 msec. Since the association repeats and RO presents periodically, as introduced in Rel-16 NR, there are no specifications to force the UE to select a specific RO in the time and the frequency domain. The UE may select a RO index in the association period based on the current configuration, and the selected RO index may be used for a next available RO (without a specific timing) to complete a PRACH transmission.

In some implementations, the UE may postpone the PRACH/preamble/MsgA transmission until the RA procedure, e.g., a 4-step or a 2-step RA procedure, is terminated due to timer expiration or receiving SI change indication of short message on its paging occasion. In Rel-16 NR, the RA procedure may be triggered by the following situations:
- Initial access from RRC_IDLE: no timer
- RRC Connection Re-establishment procedure: the RA may be terminated if timer T311 or T301 expires.
- Data arrival during RRC_CONNECTED when UL synchronization status is non-synchronized: no timer
- UL data arrival during RRC_CONNECTED when there are no PUCCH resources for SR available: no timer
- SR failure: no timer
- Request by RRC upon synchronous reconfiguration (e.g. handover): RA is terminated if timer T304 expires.
- The transition from RRC_INACTIVE: the RA is terminated if timer T319 expires.
- To establish time alignment for a secondary TAG, i.e., a secondary TA group: no timer
- Request for Other SI: no timer
- Beam failure recovery: no timer
- Consistent UL LBT failure on SpCell: RA may be terminated if timer T311 or T301 expires.

In some implementations, the timers listed above are configurable by the NW with the max values at least 10 seconds. With some proper configurations, the UE may have sufficient time for receiving timestamps and adding a TA on the selected RO. However, 10 seconds is insufficient for a GNSS receiver to complete initialization. The minimum required time for GNSS initialization is 30 seconds because one complete signal frame used for initialization has a length of 30 seconds. In general, the GNSS receivers takes 2 to 3 minutes to accomplish the initialization.

Based on this observation, during the RRC_CONNECTED and if the timer T311, T301, T304, or T319 is running, the UE may not be able to perform the delay estimation and compensation if a GNSS receiver is not ready or needs an initialization. To handle this, the NW may provide some assistant information to help UE out.

In one embodiment, the following events may trigger a RA procedure, for example, RRC Connection Re-establishment procedure, Request by RRC upon synchronous reconfiguration (e.g. handover), Transition from RRC_INACTIVE, and Consistent UL LBT failure on SpCell.

In one embodiment, the UE may receive assistant information for the initial TA calculation used by the RA procedure, for example, a reference TA value or time variation of TA via dedicated signalling (e.g., UE-specific signalling).

In one embodiment, the UE may receive a new timer providing extra time for GNSS initialization on top of the configured T311, T301, T304, or T319. For the NW to provide such configuration, the UE may transmit the UE Assistance Information message to provide GNSS synchronization information, e.g., whether GNSS is in-sync, or whether GNSS initialization is needed. The UE Assistance information message may also indicate whether the UE is capable to derive initial TA value shortly.

In one embodiment, the UE may receive new timers used by the UE for an NTN serving cell or an NTN serving area, denoted by NTN-T311, NTN-T301, NTN-T304, or NTN-T319, where configurable values in the timers have a unit of minute, e.g., 2 minutes, 3 minutes, and 5 minutes.

In on embodiment, a UE may receive one or multiple scaling factors, e.g., a scaling factor of 10, 20, or 30, used to extend the period of the baseline configuration provided in Rel-16 NR, e.g., provided by T311, T301, T304, or T319.

### PDCCH order

In some implementations, the PDCCH order is used to trigger a PRACH transmission for the following situations:
- data arrival during the RRC_CONNECTED when UL synchronization status is non-synchronized.
- to establish time alignment for a secondary TAG.

In some implementations, the PDCCH order supports both contention-based random access (CBRA) and contention-free random access (CFRA). For CFRA, the configured PRACH occasion, RA preamble, and SSB index are indicated via a DCI format 1_0. For CBRA, DCI format 1_0 is used to indicate the "Random Access Preamble index" filed with all zeros, and the UE may randomly select a RO, a RA preamble for a PRACH transmission.

In some implementations, if the RA procedure is initiated by a PDCCH order, a processing time for preparing a PRACH transmission is specified in Rel-16 NR. alternatively, the processing time may be insufficient for NTN, regarding interaction with an internal GNSS receiver and the initial TA derivation. To handle this, new parameters, according to initial TA and reference time stamps, may be needed to prolong the processing time for UE.

In some implementations, if the reference time information is used for the PRACH transmission in NTN, then reusing the legacy initial access procedure may have some issues. For example, the first issue is that determination of valid RACH occasions may need some enhancement if the initial TA is needed for a PRACH transmission in advance of a RO. The second issue is that SIB9 is not designed for initial access. This is because SIB9 belongs to Other SI (OSI) that is configured via SIB 1 and has a minimum periodicity of 80 ms. Thus, it is necessary to enable the OSI for initial access with some enhancement.

### PRACH occasion validity

In some implementation, as introduced in Rel-16 NR, the RO validity is determined by the UE according to paired/unpaired spectrum operation, the selected SSB, and NW configuration if anyone exists. The UE may also consider the possible occurrence of measurement gaps to determine if a RO is valid. Specifically, some specifications are introduced in the below, for example, in 3GPP TS 38.321 V16.0.0 (2020-03):
1> else if an SSB is selected above:
   2> determine the next available PRACH occasion from the PRACH occasions corresponding to the selected SSB permitted by the restrictions given by the ra-ssb-OccasionMaskIndex if configured or indicated by PDCCH (the MAC entity may select a PRACH occasion randomly with equal probability amongst the consecutive PRACH occasions according to clause 8.1 of TS 38.213, corresponding to the selected SSB; the MAC entity may take into account the possible occurrence of measurement gaps when determining the next available PRACH occasion corresponding to the selected SSB).

Furthermore, the specifications in 3GPP TS 38.213 V16.1.0 (2020-03) is also introduced in the below:
For paired spectrum, all PRACH occasions are valid.

In Rel-17 NTN, a new rule for validity may be added. If the next available RO cannot be transmitted in advance with a TA required, e.g., the required transmission timing of the RO is earlier than the receive time of the selected SSB, then the RO may be precluded as a valid RO.

In one embodiment, if an initial TA value is provided, for paired spectrum a PRACH occasion in a PRACH slot is valid if it does not precede, i.e., be earlier in time, the associated SSB after the initial TA value has been added. The initial TA value may be broadcast by NW via SI, e.g., SIB1 or OSI, or via dedicated signalling, e.g., UE-specific RRC messages (handover) or DCI formats (PDCCH order).

In one embodiment, if an initial TA value is provided, or if an initial TA is requested, or reference time information is provided by NW, and if a selected RO cannot satisfy the timeline requirement, e.g., initial TA cannot be applied due to lack of reference time information or the selected RO timing is too close to the selected SSB timing, UE may declare a failure, then determine for the next available RO.

### Reference time information in OSI

In some implementation, as introduced in Rel-16 NR, the initial access only requires MIB and SIB1. The MIB on PBCH, being a part of an SSB, provides UE with parameters, e.g., CORESET#0 configuration, to monitor PDCCH for scheduling PDSCH that carries the SIB1. The SIB1 contains information required for initial access.

In one implementation, the SIB1 may also provide the scheduling of OSI, e.g., parameters to monitor PDCCH for scheduling PDSCH that carries a SI message including the SIB9. If provided, UE may obtain the reference time information by the PDSCH reception, and the minimum periodicity for a SI message is 8 radio frames. For example, it is introduced, as shown in 3GPP TS 38.321 V16.0.0 (2020-03), in the below:

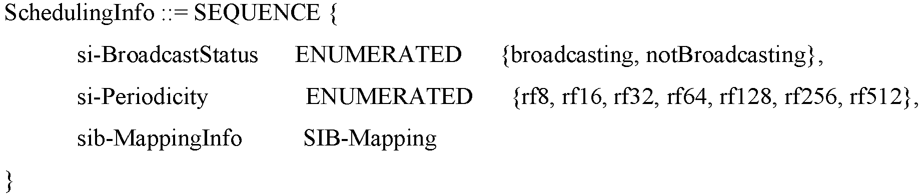

### si-Periodicity

Periodicity of the SI-message in radio frames. Value rf8 corresponds to 8 radio frames, value rf16 corresponds to 16 radio frames, and so on.

As introduced in Rel-17 NTN, if the SIB9 or a new SIB of NTN is required for the initial access, then the processing time between a selected SSB and its valid RO may go beyond 80 ms potentially. Some enhancement may be needed, e.g., to provide additional scheduling chance that shortens the processing time.

In one embodiment, for a UE in the RRC_CONNECTED, the NW may provide NTN SI, e.g., NTN SIBs, repeatedly through dedicated signalling using the RRCReconfiguration message, e.g. if the UE has an active BWP with no common search space configured to monitor NTN SI. In another implementations, a UE (e.g., a UE supports NTN) may (continuously) monitor/acquire the NTN SI while camped on a cell or any cells (e.g., a cell in a NTN deployment).

### PRACH occasion validity

In some implementations, for the RO validity determination, if the initial TA is introduced for a PRACH transmission, new signalling and new UE behavior may be needed. Some alternatives are given below:
- Adding a time gap after a selected SSB, such that only ROs started after the gap may be valid. The time gap may be configurable in a cell-specific manner and be broadcasted in SI by NW. Alternatively, the time gap may be specified in the specification. In one embodiment, the time gap may be implemented as the worst-case TA value or the worst-case round-trip time, in this cell.
- Adding a new restriction on PRACH transmission such that UE may determine the next available RO after receiving the reference time information or after finishing the initial TA derivation.
- A reference time information may be indicated/broadcasted via new signalling (e.g., specific SI), wherein the time and the frequency location to receive the new signalling may be indicated via MIB and/or SIB1. For example, the UE may further receive the new signalling after receiving the MIB and/or SIB1.

### Reference time information in OSI

In some implementations, if the OSI is needed during the initial access, new UE behavior and new configuration may be needed for the following situations:
- Forcing UE to perform or re-perform RA resource selection after receiving the OSI, if needed.
- A new offset between the new and legacy SI messages to avoid the crowed first set of system frames when scheduling the SI messages.
- An independent SI window to provide additional scheduling chance.

Alternatively, the NW may broadcast the reference time information in SIB1 rather than using OSI.

### PDCCH order

In some implementations, if the initial TA is needed during the initial access, new parameters on the processing time may be needed.
- A new processing delay for the initial TA as a function of the following inputs:
   ▪ cell-specific scheduling offset between DL and UL frames, e.g., K_offset.
   ▪ cell-specific TA value, e.g., common TA among all UEs in a serving cell.
   ▪ dedicated TA value, e.g., UE specific TA indicated via a DCI format.
   ▪ connected satellite orbit, e.g., LEO or GEO.
   ▪ connected satellite type, e.g., transparent, or regenerative payload.

In one implementation, a PDCCH order triggers a RA procedure via a DCI format, where some assistant information required for performing the RA procedure may be needed and presented, for example, in the below:
- the initial TA (in case UE may not derive the TA),
- the cell-specific common TA (in case UE may not read SIB1 or the common TA changes in SIB1 without SI change indication),
- the TA variation in time (in case UE postpones a PRACH transmission too long such that the initial TA may not be accurate or valid anymore), and
- the cell-specific common UL doppler shift (broadcast in SIB1 for UE to correct UL frequency due to Doppler effect from satellite movement).

### Implementation details

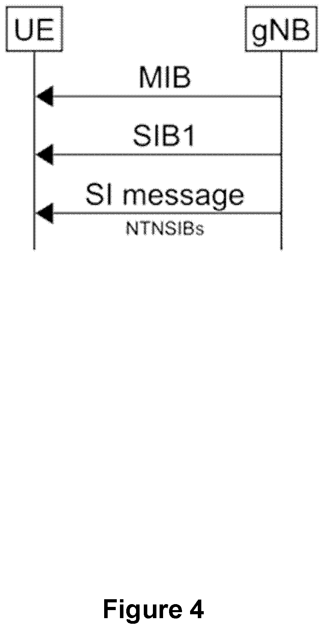

Please refer to Figure 4, which illustrates an overview of the SI acquisition according to an example implementation of the present disclosure. In some implementations, the SI is divided into the MIB, SIBs and NTNSIBs, where:
- The MIB and the SIB1 comprise basic information required for initial access and information for acquiring any other SI.
- The NTNSIBs may contain one or multiple SIBs with information about reference time information, satellite ephemeris data, and basic information required for initial access to connect to a satellite. Specifically, the NTNSIBs are carried in SI messages, which are transmitted on the DL-SCH and mapped to the same SI message if NTNSIBs and SIBs have the same periodicity.

In some implementation, the UE in the RRC_IDLE and the RRC_INACTIVE may ensure having a valid version of at least the MIB, SIB1 through SIB4 and NTNSIBs (if the UE supports the NTN). The NTNSIBs may contain information related to the UTC for the UE to obtain the initial TA value.

In one implementation, upon receiving the NTNSIBs, the UE may:
1> if in RRC_IDLE or in RRC_INACTIVE or in RRC_CONNECTED while T311 is running:
   2> if the UE synchronizes to GNSS and UTC information from GNSS is available.
      3> use the received timestamp(s) in the NTNSIBs and the current UTC from GNSS to derive the initial TA value.
   2> else (no current UTC information from GNSS)
      3> use the received timestamp(s) to assist the GNSS initialization.
      3> if GNSS is not supported by the UE.
         4> apply the cell-specific common TA value, if configured in SIB 1 or NTN SIBs.
1> else
   2> if the UE can obtain the current UTC information from GNSS.
      3> use the received timestamp(s) in the NTNSIBs and the current UTC from GNSS to derive TA estimation and TA drift estimation.
   2> else (no current UTC information)
      3> use the received timestamp(s) to assist the GNSS initialization.
      3> if GNSS is not supported by the UE.
         4> apply the cell-specific common TA value, if configured in SIB1 or NTN SIBs.

Furthermore, it is introduced some other implementations associated with SI acquisition in the following. In one implementation, if the received NTNSIB contains multiple reference time stamps, the stamps may be associated with the following timing:
1) the starting boundary of the SI-window where SIB is transmitted;
2) the slot of the SI-window;
3) the CORESET, the UE is configured to receive PDCCH for the NTNSIBs;
4) the PDSCH, the UE is configured to receive NTNSIBs;
5) the DMRS, the UE is configured for the NTNSIBs;
6) the system frame numbers (SFNs) indicated in the NTNSIB.

In another implementation, the SIB1 may contain the essential part of the reference time information for initial access, and the NTNSIBs may contain details on reference time information, e.g., multiple time stamps or higher resolution on UTC, for the UE to correct TA estimation and calculate TA drift (variation with time).

In another implementation, a clock drift value, i.e., the timing difference of a clock cycle between NW and GNSS may be broadcasted in SI, e.g., NTNSIBs, to enhance the timing accuracy of initial access.

In another implementation, some segmentation of NTNSIBs may be needed if the payload exceeds 2976 bits. When segmentation is configured, the initial access can only be triggered after assembling is completed.

In another implementation, the initial TA may have restriction in values. For example, if there is no cell-specific common TA, the initial TA has a min value of 10 ms and the max value of 26 ms. If there is the cell-specific common TA, the initial TA has a min value of 0 ms and a max value of 6.24 ms. All the restriction values may be configurable and may be broadcasted in SI.

In another implementation, NW may only indicate the time difference between the consecutive time stamps if multiple reference time stamps are configured. A timestamp with complete reference time information, e.g., 99 bits in Rel-16 NR SIB9, may have a longer periodicity than other timestamps with differential reference time information, e.g., few bits to indicate the time difference to the latest received timestamp.

In another implementation, if a UE has no GNSS-capabilities, the UE may not need to receive NTN-SIBs for initial access, e.g., the UE in the RRC_IDLE and the RRC_INACTIVE may ensure having a valid version of at least the MIB, SIB1 through SIB4.

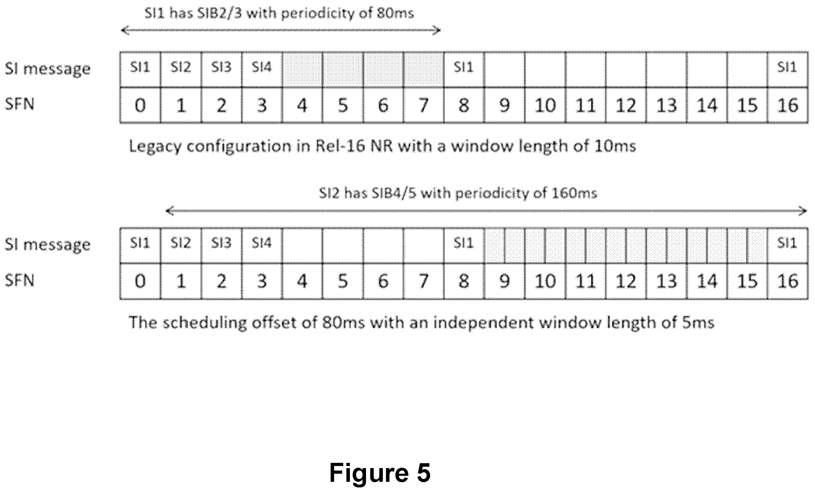

Please refer to Figure 5, which illustrates an illustration of a crowed first set of system frames and possible enhancements according to an implementation of the present disclosure. As shown in Figure 5, while acquiring an SI message, the UE may:
1> determine the start of the SI-window for the concerned SI message as follows:
   2> if the concerned SI message is configured in the schedulingInfoList
      3> follow the legacy procedure in Rel-16 NR to determine the SI-window.
   2> else if the concerned SI message is configured by NTN-SchedulingInfoList and NTN-offsetToSI in NTN-SchedulingInfo in SIB1:
      3> determine the number m which corresponds to the number of SI messages with an associated si-Periodicity of X_si frames, e.g., X_si = 8 radio frames for 80 msec, configured by schedulingInfoList in SIB1.
      3> for the concerned SI message, determine the number n which corresponds to the order of entry in the list of SI messages configured by NTN-SchedulingInfoList in SIB1.
      3> If NTN-si-WindowLength is configured in SIB1
         4> determine the integer value x = m × w + (n - 1) × w_ntn, where w_ntn is the NTN-si-WindowLength configured in SIB 1.
      3> else
         4> determine the integer value x = m × w + (n - 1) × w, where w is the si-WindowLength configured in SIB1.
      3> the SI-window configured by NTN-SchedulingInfo starts at the slot a, where a = x mod N, in the radio frame for which SFN mod T = FLOOR(x/N), where T is the si-Periodicity of the concerned SI message and N is the number of slots in a radio frame, e.g., N = 10 for SCS = 15kHz.
where the above parameters configured by the gNB have the following descriptions:
- NTN-SchedulingInfo: this contains information needed for the acquisition of SI messages.
- NTN-SchedulingInfoList: this indicates a list of SI messages for NTN, e.g., NTN-SchedulingInfoList = SEQUENCE (SIZE (1..maxSI-Message)) OF NTN-SchedulingInfo.
- NTN-offsetToSI: this indicates that the SI message in NTN-SchedulingInfoList is scheduled with an offset of X_si radio frames compared to SI message in SchedulingInfoList.
- NTN-si-WindowLength: The length of the SI scheduling window for SI messages scheduled in NTN-SchedulingInfoList.
- si-Periodicity: this indicates a periodicity of the SI-message in radio frames.
- schedulingInfoList: this indicates a list of SI messages in Rel-16 NR.
- si-WindowLength: this indicates the length of the SI scheduling window.

Furthermore, it is introduced some other implementations associated with UE behavior on SI-window in the following. In one implementation, if NTN-SchedulingInfoList is configured and if NTN-offsetToSI is not provided in SIB1, the number m is set to zero to derive the integer value of x.

In another implementation, the mapping of SIBs to SI messages is configured in schedulingInfoList, while the mapping of NTNSIBs to SI messages is configured in NTN-SchedulingInfoList.

In another implementation, NTNSIBs having the same periodicity may be mapped to the same SI message.

In another implementation, NTNSIBs may be configured to be cell-specific or area-specific, using an indication in SIB1. The cell-specific SIB is applicable only within a cell that provides the SIB while the area-specific SIB is applicable within an area referred to as the SI area, which consists of one or several cells.

In another implementation, the mapping of NTNSIBs to SI messages may be multiplexed with legacy SIBs by being configured in SchedulingInfoList, while the NTN-SchedulingInfoList may be used to carry the legacy SIBs to provide a different SI-window length or periodicity.

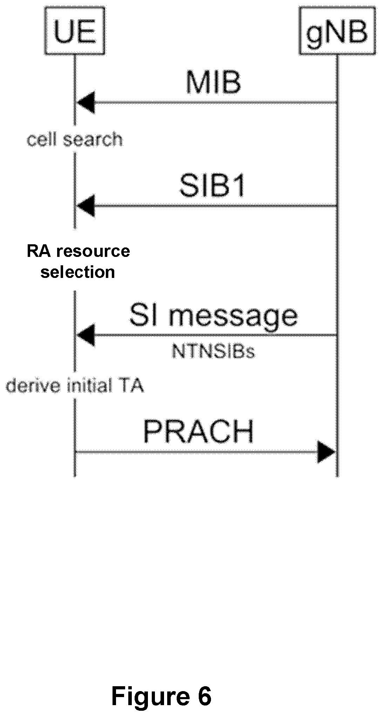

Please refer to Figure 6, which illustrates an overview of RA resource selection and RA preamble transmission according to an implementation of the present disclosure. As shown in Figure 6, it is introduced in some implementations, for the RA resource selection, that the UE may:
1> select an SSB with RSRP above a configured threshold, or
1> select the SSB signalled by PDCCH, or
1> select any SSB
1> if an SSB is selected above
   2> determine the next available PRACH occasion from the PRACH occasions corresponding to the selected SSB permitted by the restrictions given by the ra-ssb-OccasionMaskIndex if configured or indicated by PDCCH
   2> the UE may select a RO randomly with equal probability amongst the consecutive ROs, corresponding to the selected SSB.
   2> the UE may consider the possible occurrence of measurement gaps and/or the initial TA preparation when determining the next available PRACH occasion corresponding to the selected SSB.
1> perform the RA preamble transmission procedure

In some implementations, for the validity of PRACH occasion and for paired spectrum, the UE may:
1> if the initial TA is not requested (not required in the selected cell)
   2> all PRACH occasions are valid
1> else
   2> if the initial TA is available (UE has derived the initial TA)
      3> if a PRACH occasion starts at least N_ini symbols/slots/absolute time unit after a last reception symbol of the selected SSB, where N_ini is the initial TA derived by the UE or provided by NW in MIB/SIB1/OSI.
         4> the PRACH occasion is valid
   2> else (the initial TA is required in the serving cell, but UE has no initial TA)
      3> no PRACH occasion is valid

In some implementations, for the RA preamble transmission procedure on PRACH, the UE may, for each RA preamble:
1> if the selected cell requires the initial TA, e.g., NTN cells, or indication in MIB/SIB1, and
1> if no initial TA value has derived from the physical layer for this RA preamble transmission:
   2> perform the RA Resource selection procedure
   2> UE may prevent to select the same RA resource.
1> else
   2> instruct the physical layer to transmit the RA preamble using the selected PRACH occasion

In some implementations, for UL power control and for each RA preamble, the UE may:
1> if PREAMBLE_TRANSMISSION_COUNTER is greater than one; and
1> if the notification of suspending power ramping counter has not been received from lower layers; and
1> if initial TA value has derived from the physical layer or the upper layers for the last RA preamble transmission; and
1> if SSB or CSI-RS selected is not changed from the selection in the last RA preamble transmission:
   2> increment PREAMBLE_POWER_RAMPING_COUNTER by 1
   2> instruct the physical layer to transmit the RA preamble using the selected PRACH occasion

In some implementation, it is introduced some implementations associated with PRACH occasion validity in the following. In one implementation, an internal indication whether the initial TA value has been derived may be needed, e.g., initial TA indication with a value of 1 for being completed and with a value of 0 for being unavailable.

In another implementation, processing time may be needed after receiving the OSI where the reference time information is transmitted. The time between the last symbol of the OSI and the first symbol of the PRACH transmission may be larger than or equal to N_osi symbols/slots/absolute time unit, where N_osi is configurable by NW.

In another implementation, RA resource selection only starts after the initial TA value is ready. For initial access, the UE may perform cell search, read MIB, SIB1, OSI, calculate the initial TA, and then perform RA resource selection in this order. The RA resource selection may not start before receiving the OSI for power saving.

In another implementation, the validity of a RO is not used for SSB-RO association. The validity of a RO is only used to determine a PRACH/preamble/MsgA transmission and makes no impacts on RA resource selection. The UE may only consider the validity when the UE determines the next available PRACH/preamble/MsgA occasion.

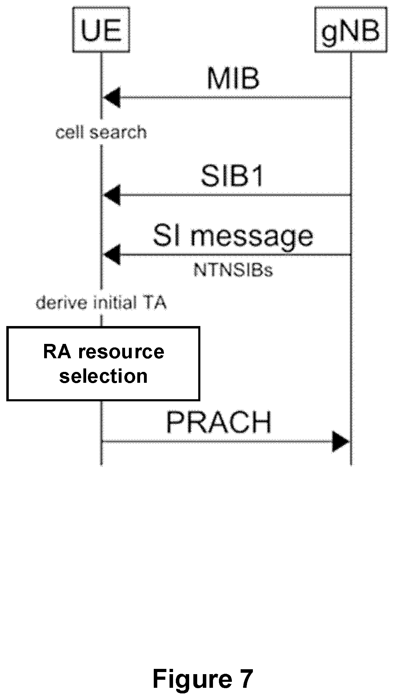

Please refer to Figure 7, which illustrates an illustration of RA resource selection initiated after receiving NTNSIBs and TA derivation according to an implementation of the present disclosure. As shown in Figure 7, when the RA procedure is initiated on a serving cell, the MAC entity may:
1> select RA type
1> if RA type is set to 2-stepRA
   2> if initial TA value has derived from the physical layer; or
   2> if NTNSIB has been received
      3> perform the RA Resource selection procedure for 2-step RA type
   2> else
      3> postpone the RA resource selection procedure until the next available PRACH occasion
1> else if RA type is set to 4-stepRA
   2> if initial TA value has derived from the physical layer; or
   2> if NTNSIB has been received
      3> perform the RA Resource selection procedure for legacy 4-step RA type
   2> else
      3> postpone the RA resource selection procedure until the next available PRACH occasion

Specifically, it is introduced some other implementations associated with the RA resource selection in the following. In one implementation, if the initial TA is not ready, the UE may postpone the RA resource selection until:
- the next available SSB-RO mapping cycle; or
- the next available SSB-RO association period; or
- the next available SSB-RO association period pattern; or
- a configured/defined timer expires; or
- up to UE implementation.

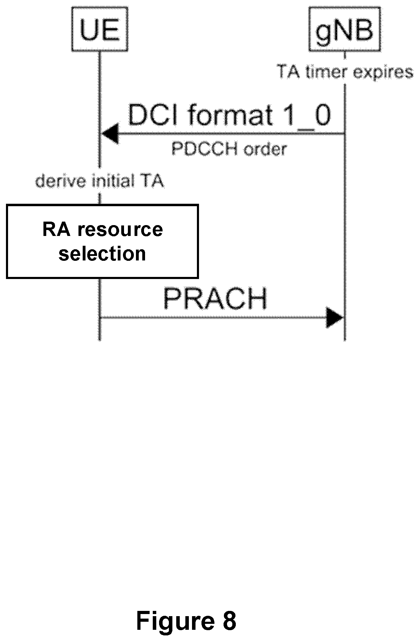

Please refer to Figure 8, which illustrates an illustration of PDCCH order and RA initiation according to an implementation of the present disclosure. As shown in Figure 8, if the CRC of the DCI format 1_0 is scrambled by C-RNTI and the "Frequency-domain resource assignment" field are of all ones, the DCI format 1_0 is for RA procedure initiated by a PDCCH order, with all remaining fields set as follows:
- legacy fields specified in Rel-16 NR
   ■ RA Preamble index
   ■ UL/SUL indicator
   ■ SS/PBCH index
   ■ PRACH Mask index
   ■ Reserved bits
- New fields for Rel-17 NTN
   ■ Initial TA value - 12 bits: for indicating an initial TA value directly by the DCI format. For a TAG indicates N_{TA} values by index values of T_{A} = 0, 1, 2, ..., 4096.
   ■ Initial TA request indicator - 1 bit
      ▲ Value of 1: inform UE to derive initial TA
      ▲ Value of 0: inform UE not to derive initial TA, but to apply the maintain TA
   ■ Initial TA message indicator - 1 bit: inform UE to receive initial TA in PDSCH
      ▲ Value of 1: initial TA message is carried in the scheduled PDSCH
      ▲ Value of 0: no initial TA message is carried
   ■ If the initial TA message is carried, then the following fields present:
      ▲Frequency-domain resource assignment - configurable size
      ▲Time-domain resource assignment - 4 bits
      ▲VRB-to-PRB mapping - 1 bit
      ▲Modulation and coding scheme - 5 bits
      ▲TB scaling - 2 bits

In some implementations, if a RA procedure is initiated by a PDCCH order, the UE, if requested by higher layers, transmits a PRACH in the selected PRACH occasion, for which time between the last symbol of the PDCCH order reception and the first symbol of the PRACH transmission is larger than or equal to Δ*_{RO}* msec. Specifically, the RA procedure configuration or Δ*_{RO}* may include:
- Legacy parameters from Rel-16 NR
   ■ N*_{T,2}*: a PUSCH processing time required for UE processing capability
   ■ Δ*_{BWPSwitching}*: processing time required if the active UL BWP changes
   ■ Δ*_{Delay}:* 0.5 msec for FR1 and 0.25 msec for FR2
- New parameters for Rel-17 NTN
   ■ Δ*_{scheduling}:* the processing time required if a DL-UL scheduling offset is provided
   ■ Δ*_{initial_TA}*: the processing time required if an initial TA derivation is needed
   ■ Δ*ₜᵢₘₑₛₜₐₘₚ:* the processing time required if timestamps carried in OSI is provided
   ■ Δ*ₚᵣₒₚₐₜᵢₒₙ:* the maximum round-trip time if TA alignment is not established

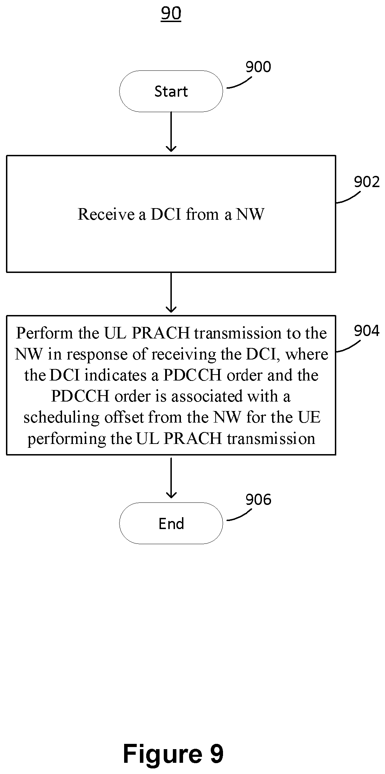

Please refer to Figure 9, which illustrates a procedure 90 for UL PRACH transmission performed by a UE according to an implementation of the present disclosure. As shown in Figure 9, the procedure 90 for the UE includes the following actions:
Action 900: Start.

Action 902: Receive a DCI from a NW.

Action 904: Perform the UL PRACH transmission to the NW in response of receiving the DCI, where the DCI indicates a PDCCH order and the PDCCH order is associated with a scheduling offset from the NW for the UE performing the UL PRACH transmission.

Action 906: End.

Preferably, action 902 to action 904 of the procedure 90 may be performed by the UE. In some implementations, in action 902, the UE may receive the DCI from the NW. In action 904, the UE may perform the UL PRACH transmission to the NW in response of receiving the DCI. Specifically, the DCI indicates the PDCCH order that is associated with the scheduling offset from the NW for the UE performing the UL PRACH transmission, and the NW is the NTN. In some implementations, the PDCCH order indicates that the NW may utilize the DCI to trigger the UE performing the PRACH transmission; alternatively, the NW may utilize the RRC or MAC CE (e.g. K_offset) to indicate the scheduling offset for the UE. Certainly, the detailed mechanisms and/or operations (e.g., action 902 to action 904) of the procedure 90 are described in above paragraphs and neglected hereinafter for brevity.

Furthermore, the procedure 90 may further include other actions/procedures/mechanisms/operations. In some implementations, the procedure may indicate the UE to determine an PRACH occasion being valid and to perform the PRACH transmission in response of determining the PRACH occasion being valid. Specifically, the scheduling offset indicates a processing delay of the UE. Besides, the processing delay of the UE is a period between a last symbol of reception of the PDCCH order and a first symbol of the PRACH transmission.

In some implementations, the procedure 90 may indicate the UE to determine at least one of a TA value and a UL doppler shift for a RA procedure corresponding to the PRACH transmission. Specifically, the RA procedure is triggered based on a DCI format of the DCI.

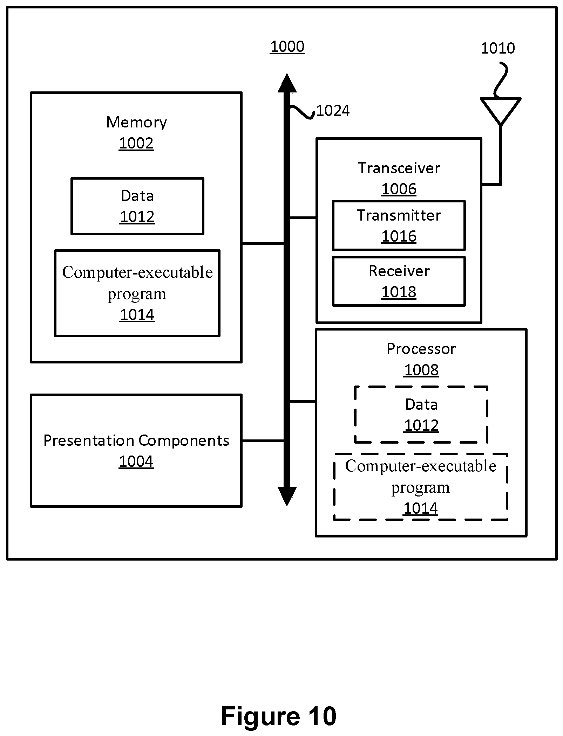

Please refer to Figure 10, which illustrates a block diagram of a node 1000 for wireless communication according to an implementation of the present disclosure. As illustrated in Figure 10, the node 1000 includes a transceiver 1006, a processor 1008, a memory 1002, one or more presentation components 1004, and at least one antenna 1010. The node 1000 may also include a Radio Frequency (RF) spectrum band module, a BS communications module, an NW communications module, and a system communications management module, input/output (I/O) ports, I/O components, and power supply (not explicitly illustrated in Figure 10). Each of these components may be in communication with each other, directly or indirectly, over one or more buses 1024. The node 1000 may be a UE or a BS that performs various functions disclosed herein, for example, with reference to Figure 9.

The transceiver 1006 includes a transmitter 1016 (e.g., transmitting/transmission circuitry) and a receiver 1018 (e.g., receiving/reception circuitry) and may be configured to transmit and/or receive time and/or frequency resource partitioning information. The transceiver 1006 may be configured to transmit in different types of subframes and slots, including, but not limited to, usable, non-usable and flexibly usable subframes and slot formats. The transceiver 1006 may be configured to receive data and control channels.

The node 1000 may include a variety of computer-readable media. Computer-readable media may be any available media that may be accessed by the node 1000 and include both volatile (and non-volatile) media and removable (and non-removable) media. By way of example, and not limitation, computer-readable media may include computer storage media and communication media. Computer storage media may include both volatile (and non-volatile) and removable (and non-removable) media implemented according to any method or technology for storage of information such as computer-readable.

Computer storage media includes RAM, ROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer storage media does not include a propagated data signal. Communication media may typically embody computer-readable instructions, data structures, program modules, or other data in a modulated data signal such as a carrier wave or other transport mechanism and include any information delivery media.

The term "modulated data signal" may refer to a signal that has one or more of its characteristics set or changed in such a manner as to encode information in the signal. By way of example, and not limitation, communication media may include wired media such as a wired NW or direct-wired connection, and wireless media such as acoustic, RF, infrared and other wireless media. Combinations of any of the previous disclosure should also be included within the scope of computer-readable media.

The memory 1002 may include computer-storage media in the form of volatile and/or non-volatile memory. The memory 1002 may be removable, non-removable, or a combination thereof. For example, the memory 1002 may include solid-state memory, hard drives, optical-disc drives, etc.

As illustrated in Figure 10, the memory 1002 may store a computer-executable (or readable) program 1014 (e.g., software codes) that are configured to, when executed, cause the processor 1008 to perform various functions disclosed herein, for example, with reference to Fig 10. Alternatively, the computer-executable program 1014 may not be directly executable by the processor 1008 but may be configured to cause the node 1000 (e.g., when compiled and executed) to perform various functions disclosed herein.

The processor 1008 (e.g., having processing circuitry) may include an intelligent hardware device, a Central Processing Unit (CPU), a microcontroller, an ASIC, etc. The processor 1008 may include memory. The processor 1008 may process the data 1012 and the computer-executable program 1014 received from the memory 1002, and information received via the transceiver 1006, the baseband communications module, and/or the NW communications module. The processor 1008 may also process information to be sent to the transceiver 1006 for transmission through the antenna 1010 to the NW communications module for subsequent transmission to a CN.

One or more presentation components 1004 may present data to a person or other device. Examples of presentation components 1004 may include a display device, speaker, printing component, vibrating component, etc.

From the present disclosure, it is manifested that various techniques may be used for implementing the disclosed concepts. Moreover, while the concepts have been disclosed with specific reference to certain implementations, a person of ordinary skill in the art would recognize that changes may be made in form and detail. As such, the disclosed implementations are to be considered in all respects as illustrative and not restrictive. It should also be understood that the present disclosure is not limited to the particular disclosed implementations. Many rearrangements, modifications, and substitutions are possible.

## Claims

1. A wireless communication method performed by a User Equipment, UE, for an uplink, UL, Physical Random Access Channel, PRACH, transmission, the wireless communication method comprising:
receiving (902) a Downlink Control Information, DCI, from a network, NW;
and
performing (904) the UL PRACH transmission to the NW in response of receiving the DCI,
wherein:
the DCI indicates a Physical Downlink Control Channel, PDCCH, order, and the PDCCH order is associated with a scheduling offset from the NW for the UE performing the UL PRACH transmission, and
the scheduling offset indicates a processing delay of the UE, which is a period between a last symbol of reception of the PDCCH order and a first symbol of the UL PRACH transmission.

2. The wireless communication method according to claim 1, further comprising:
determining a PRACH occasion being valid; and
performing the PRACH transmission in response of determining the PRACH occasion being valid.

3. The wireless communication method according to claim 1, further comprising:
determining at least one of a Timing Advance, TA, value and a UL doppler shift for a Radon Access, RA, procedure corresponding to the PRACH transmission,
wherein the RA procedure is triggered based on a DCI format of the DCI.

4. The wireless communication method according to claim 1, wherein the NW is a Non-Terrestrial Network, NTN.

5. A User Equipment, UE, in a wireless communication system for an uplink, UL, Physical Random Access Channel, PRACH, transmission, the UE comprising:
a processor (1008); and
a memory (1002) coupled to the processor, wherein the memory stores a computer-executable program that when executed by the processor, causes the processor to:
receive (902) a Downlink Control Information, DCI, from a network, NW; and
perform (904) the UL PRACH transmission to the NW in response of receiving the DCI,
wherein:
the DCI indicates a Physical Downlink Control Channel, PDCCH, order, and the PDCCH order is associated with a scheduling offset from the NW for the UE performing the UL PRACH transmission, and
the scheduling offset indicates a processing delay of the UE, which is a period between a last symbol of reception of the PDCCH order and a first symbol of the UL PRACH transmission.

6. The UE according to claim 5, wherein the processor when executed by the processor, further causes the processor to:
determine a PRACH occasion being valid; and
perform the PRACH transmission in response of determining the PRACH occasion being valid.

7. The UE according to claim 5, wherein the processor when executed by the processor, further causes the processor to:
determine at least one of a Timing Advance, TA, value and a UL doppler shift for a Radon Access, RA, procedure corresponding to the PRACH transmission,
wherein the RA procedure is triggered based on a DCI format of the DCI.

8. The UE according to claim 5, wherein the NW is a Non-Terrestrial Network, NTN.

## Patentansprüche

1. Drahtloses Kommunikationsverfahren, das von einem Benutzergerät (Engl. User Equipment), UE, für eine Uplink-, UL-, Physical-Random-Access-Channel-, PRACH-, Übertragung durchgeführt wird, wobei das drahtlose Kommunikationsverfahren Folgendes umfasst:
Empfangen (902) einer Downlink-Control-Information, DCI, von einem Netzwerk, NW; und
Durchführen (904) der UL-PRACH-Übertragung an das NW als Reaktion auf das Empfangen der DCI,
wobei:
die DCI einen Physical-Downlink-Control-Channel-, PDCCH-, Auftrag angibt und der PDCCH-Auftrag einem Planungsausgleich von dem NW für das UE, das die UL-PRACH-Übertragung durchführt, zugeordnet ist, und
der Planungsausgleich eine Verarbeitungsverzögerung von dem UE angibt, die eine Periode zwischen einem letzten Symbol des Empfangs des PDCCH-Auftrags und einem ersten Symbol der UL-PRACH-Übertragung ist.

2. Drahtloses Kommunikationsverfahren nach Anspruch 1, ferner umfassend:
Bestimmen, dass ein PRACH-Anlass gültig ist; und
Durchführen der PRACH-Übertragung als Reaktion auf das Bestimmen, dass der PRACH-Anlass gültig ist.

3. Drahtloses Kommunikationsverfahren nach Anspruch 1, ferner umfassend:
Bestimmen mindestens eines Wertes aus einem Timing-Advance-, TA, und einer UL-Dopplerverschiebung für ein Radon-Access-, RA-, Verfahren, das der PRACH-Übertragung entspricht,
wobei das RA-Verfahren anhand eines DCI-Formats der DCI ausgelöst wird.

4. Drahtloses Kommunikationsverfahren nach Anspruch 1, wobei das NW ein nicht-terrestrisches Netzwerk, NTN, ist.

5. Benutzergerät, UE, in einem drahtlosen Kommunikationssystem für eine Uplink-, UL-, Physical-Random-Access-Channel-, PRACH-, Übertragung, wobei das UE Folgendes umfasst:
einen Prozessor (1008); und
einen Speicher (1002), der mit dem Prozessor gekoppelt ist, wobei der Speicher ein computerausführbares Programm speichert, das, wenn es vom Prozessor ausgeführt wird, den Prozessor veranlasst zum:
Empfangen (902) einer Downlink-Control-Information, DCI, von einem Netzwerk, NW; und
Durchführen (904) der UL-PRACH-Übertragung an das NW als Reaktion auf das Empfangen der DCI,
wobei:
die DCI einen Physical-Downlink-Control-Channel-, PDCCH-, Auftrag angibt und der PDCCH-Auftrag einem Planungsausgleich von dem NW für das UE, das die UL-PRACH-Übertragung durchführt, zugeordnet ist, und
der Planungsausgleich eine Verarbeitungsverzögerung von dem UE angibt, die eine Periode zwischen einem letzten Symbol des Empfangs des PDCCH-Auftrags und einem ersten Symbol der UL-PRACH-Übertragung ist.

6. UE nach Anspruch 5, wobei der Prozessor, wenn er von dem Prozessor ausgeführt wird, den Prozessor ferner veranlasst zum:
Bestimmen eines PRACH-Anlasses als gültig; und
Durchführen der PRACH-Übertragung als Reaktion auf das Bestimmen, dass der PRACH-Anlass gültig ist.

7. UE nach Anspruch 5, wobei der Prozessor, wenn er von dem Prozessor ausgeführt wird, den Prozessor ferner veranlasst zum:
Bestimmen mindestens eines Wertes aus einem Timing-Advance-, TA, und einer UL-Dopplerverschiebung für ein Radon-Access-, RA-, Verfahren, das der PRACH-Übertragung entspricht,
wobei das RA-Verfahren anhand eines DCI-Formats der DCI ausgelöst wird.

8. UE nach Anspruch 5, wobei das NW ein nicht-terrestrisches Netzwerk, NTN, ist.

## Revendications

1. Procédé de communication sans fil réalisé par un équipement d'utilisateur, UE, pour une transmission d'un canal physique d'accès aléatoire, PRACH, de liaison montante, UL, le procédé de communication sans fil comprenant :
la réception (902) d'une information de commande de liaison descendante, DCI, en provenance d'un réseau, NW ; et
la réalisation (904) de la transmission de PRACH UL au NW en réponse à la réception de la DCI,
dans lequel :
la DCI indique un ordre de canal physique de commande de liaison descendante, PDCCH, et l'ordre de PDCCH est associé à un décalage de programmation en provenance du NW pour que l'UE réalise la transmission de PRACH UL, et
le décalage de programmation indique un retard de traitement de l'UE, qui est une période entre un dernier symbole de réception de l'ordre de PDCCH et un premier symbole de la transmission de PRACH UL.

2. Procédé de communication sans fil selon la revendication 1, comprenant en outre :
la détermination qu'une occasion de PRACH est valide ; et
la réalisation de la transmission de PRACH en réponse à la détermination que l'occasion de PRACH est valide.

3. Procédé de communication sans fil selon la revendication 1, comprenant en outre :
la détermination d'au moins l'un(e) d'une valeur d'avance de synchronisation, TA, et d'un décalage doppler d'UL pour une procédure d'accès de Radon, RA, correspondant à la transmission de PRACH,
dans lequel la procédure de RA est déclenchée sur la base d'un format de DCI de la DCI.

4. Procédé de communication sans fil selon la revendication 1, dans lequel le NW est un réseau non terrestre, NTN.

5. Équipement d'utilisateur, UE, dans un système de communication sans fil pour une transmission d'un canal physique d'accès aléatoire, PRACH, de liaison montante, UL, l'UE comprenant :
un processeur (1008) ; et
une mémoire (1002) couplée au processeur, dans lequel la mémoire stocke un programme pouvant être exécuté par ordinateur qui, lorsqu'il est exécuté par le processeur, amène le processeur à :
recevoir (902) une information de commande de liaison descendante, DCI, à partir d'un réseau, NW ; et
réaliser (904) la transmission de PRACH UL au NW en réponse à la réception de la DCI,
dans lequel :
la DCI indique un ordre de canal physique de commande de liaison descendante, PDCCH, et l'ordre de PDCCH est associé à un décalage de programmation à partir du NW pour que l'UE réalise la transmission de PRACH UL, et
le décalage de programmation indique un retard de traitement de l'UE, qui est une période entre un dernier symbole de réception de l'ordre de PDCCH et un premier symbole de la transmission de PRACH UL.

6. UE selon la revendication 5, dans lequel le processeur, lors de l'exécution par le processeur, amène en outre le processeur à :
déterminer qu'une occasion de PRACH est valide ; et
réaliser la transmission de PRACH en réponse à la détermination que l'occasion de PRACH est valide.

7. UE selon la revendication 5, dans lequel le processeur, lors de l'exécution par le processeur, amène en outre le processeur à :
déterminer au moins l'un(e) d'une valeur d'avance de synchronisation, TA, et d'un décalage doppler d'UL pour une procédure d'accès de Radon, RA, correspondant à la transmission de PRACH,
dans lequel la procédure de RA est déclenchée sur la base d'un format de DCI de la DCI.

8. UE selon la revendication 5, dans lequel le NW est un réseau non terrestre, NTN.
